# EUROPEAN PATENT APPLICATION

(11) **EP 2 721 927 A1**
(43) Date of publication of application: **23.04.2014**
(21) Application number: 13188612.9
(22) Date of filing: 14.10.2013
(51) Int. Cl.: A01K 97/12

(54) **Bite alarm**

(30) Priority: 16.10.2012 GB 201218531
(71) Applicant: Catchum 88 Limited, Hockley, Essex SS5 5LR (GB)
(72) Inventor: Nash, Kevin, Hockley, Essex SS5 5LR (GB)
(74) Representative: Harrison IP Limited

(57) **Abstract**

A bite alarm (20) is disclosed that comprises a sensor for detecting movement of a line (14) of a fishing rod (10) resting on the bite alarm (20), and a signal generator for providing an audible and/or visible warning when line movement is detected. The bite alarm (20) further comprises a connector for a cord (26) that incorporates an optic (50) fibre and leads to a bobbin (22) which comprises a body having a line clip (38, 40) for enabling the body to be releasably secured to a fishing line (14) and a light diffuser within the body. A light source powered by the bite alarm (20) is positioned to couple light into the optic fibre (50) to illuminate the light diffuser of the bobbin (22) when a bite is detected.

## Description

### Field of the invention

The present invention relates to bite alarm for use by anglers.

### Background of the invention

Anglers, in particular carp anglers, often use electronic bite alarms that generate an audible and/or visible warning when a movement of the fishing line is detected. Line movement may be detected by rotation of a pulley or by vibration of a stylus.

In addition, it is common for anglers to suspend from the section of the fishing line between the reel and the bite alarm, by means of a releasable line clip, a visual bite indicator, also referred to as a bobbin, that moves vertically up and down as the tension in the line changes. Bobbins may just hang from the fishing line and be anchored to the ground by means of a cord or they may be mounted on an arm that is pivoted or sprung to maintain the fishing line taut.

A problem encountered by anglers when fishing in poor light conditions is that they cannot see the bobbin. To mitigate this problem, it has been proposed to insert a light source into the bobbin. Chemical light sources are known that fluoresce, but they are only effective for a short length of time. It has also been suggested to provide a light emitting diode within the bobbin that is powered by the bite alarm through an electrical wire. This however requires the provision of a connector on the bite alarm which is prone to corrosion and can prevent the bite alarm, which often operates in a wet and hostile environment, from being fully protected against the elements.

### Summary of the invention

With a view to mitigating the foregoing disadvantage, the present invention provides a bite alarm comprising a sensor for detecting movement of a fishing line of a fishing rod resting on the bite alarm, and a signal generator for providing an audible and/or visible warning when line movement is detected, the bite alarm further comprising a connector for a cord of a bobbin which is to be suspended from the fishing line by a releasable line clip, the connector being positioned in register with a light source powered by the bite alarm and serving to emit light to be transmitted to the bobbin by way of an optic fibre in the cord.

The light source may, when fishing in poor light conditions, be activated at all times. To avoid draining the power supply of the bite alarm, the light source may be made to glow dimly by supplying only a small current or by rapidly applying pulses having a small mark to space ratio. Alternatively, the light source of the bite alarm may be energised only when a line movement has been detected.

The threshold level of the movement required to activate the bobbin light source may, in an embodiment of the invention, be lower than the level required to generate a visual or audible warning from the bite alarm.

In a further aspect, the invention provides a bobbin comprising a body having a line clip for enabling the body to be releasably secured to a fishing line, a light diffuser within the body and a cord incorporating an optic fibre, in combination with a bite alarm comprising a sensor for detecting movement of a fishing line of a fishing rod resting on the bite alarm, and a signal generator for providing an audible and/or visible warning when line movement is detected, wherein the bite alarm further comprises a connector for the cord of the bobbin and wherein a light source powered by the bite alarm is positioned to couple light into the optic fibre.

### Brief description of the drawings

The invention will now be described further, by way of example, with reference to the accompanying drawings, in which:
Figure 1 is a schematic representation of a fishing rod supported on a bank stick and resting on a bite alarm, with a bobbin suspended from the fishing line between the bite alarm and the reel of the fishing rod,
Figure 2 is a side view of the body of a bobbin of the present invention, and
Figure 3 is an exploded view of the bobbin in Figure 2.

### Detailed description of an embodiment

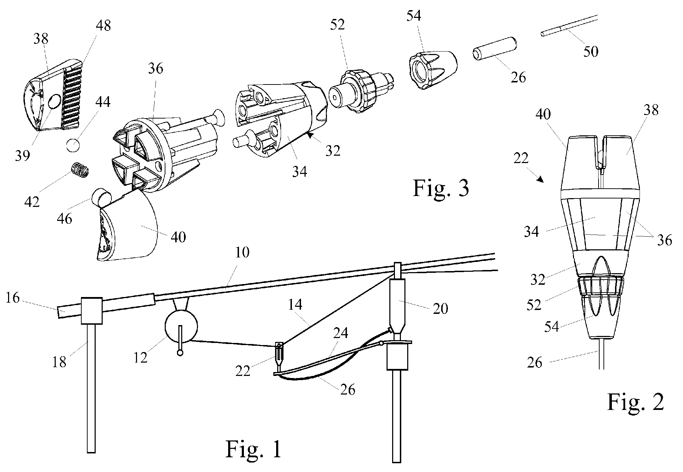

In Figure 1, a fishing rod 10 having a reel 12 about which a line 14 is wound, is supported by its handle 16 resting on a bank stick 18 and on a bite alarm 20. The line 14 makes contact with a sensor of the bite alarm 20, which may be either a pulley or a stylus, and, whenever a line movement is sensed, a signal generator of the bite alarm 20 produces an audible and/or visible warning. As bite alarms are generally well known, it is not believed necessary to describe them in further detail in the present context.

A bobbin 22 mounted on the end of a swinging arm 24 is connected by a releasable line clip to the section of the fishing line situated between the reel 12 and the bite alarm 20. The bobbin 22 acts to maintain the fishing line under constant tension and in contact with the sensor of the bite alarm 20. The line clip is typically formed by a ball biased magnetically or resiliently against one another ball or against a flat plate. The ball is able to withstand the weight of the bobbin 22 and the downward force of the swinging arm 24 but will allow the line to separate from the bobbing 22, by moving in opposition to the magnetic or resilient bias force, when the angler raises the rod 10 off the bite alarm 20.

As so far described, the arrangement shown in Figure 1 is conventional. Aside from maintaining a steady line tension, the bobbin 22 acts as an indicator. Though the bite alarm 20 could on its own suffice in signalling to the angler when a line movement has taken place, the bobbin provides visual confirmation that a line movement is taking place and also informs the angler of the direction and speed of the line movement.

The angler will not however have the benefit of the additional indication provided by the bobbin 22 when fishing in the dark or under poor light conditions. To avoid this problem, it is known to place a chemical light in the bobbin or to mount a light emitting diode (LED) in the bobbin and power the LED using an electrical wire connected to the bite alarm 20.

In the present invention, the bobbin 22 is connected by a cord 26, that incorporates a flexible optic fibre, to the bite alarm 20 and the latter includes a light source that transmits light via the optic fibre in the cord 26 to a diffuser in the bobbin 22 to cause the latter to glow or light up. Thus, no electrical power is needed within the bobbin and it can be illuminated by way of the optic fibre by means of light produced within the bite alarm.

The light source may be an LED that is sealed relative to the housing of the bite alarm and the connector for mechanically securing the cord 26 to the bite alarm 20 and for coupling light into the optic fibre may be a threaded socket in alignment with the LED. In this way, the electrical elements of the bite alarm may be housed in a sealed housing and thereby protected from the elements. Furthermore, there is no requirement for electrical contacts on the outside of the housing of the bite alarm, that could be subject to corrosion.

The bobbin 22 is made up of an assembly of several components that are shown in their assembled state in Figure 2 and in an exploded view in Figure 3. The skeleton 32 of the bobbin 22 is made of an opaque plastics material, formed with four circumferentially spaced and generally axially extending fingers 34. A transparent or translucent plastics member 36 of complementary shape fits within the skeleton 32 to form a solid shape of which alternating segments are opaque and light transmitting.

Two semicircular line clip halves 38 and 40 are screwed to the upper end of the skeleton 32, trapping the member 36 between them and the skeleton 32. Both halves 38 and 40 have a transverse cylindrical blind bore 39, one accommodating a spring 42 and a ball 44 and the other accommodating a magnet 46, which together forming a gate that has to be forced open by the line 14 before it can enter into a through passage 60 or be withdrawn from it. The lower ends 48 of the two halves 38 and 40 have corrugations 48 that are shaped and dimensioned to leave a sinuous gap 62 between the two halves 38 and 40.

This gives the angler the option of either allowing the line 14 to move freely through the line clip, when the line rests in the through passage 60 or of gripping the line 14 when it is trapped within the sinuous path gap between the two line clip halves 38, 40. The upper ends of the corrugations 48 may be tapered, if desired, to guide the line into at least part of the sinuous gap when a force is applied to pull the line down into the gap.

The opposite end of the skeleton 32 is designed for connecting the body to the cord 26 that contains an optic fibre 50. Any suitable means of connecting the cord 26 may be used, the illustrated embodiment having a collet 52 and a nut 54. As the nut 54 is tightened, the fingers of collet 52 tighten onto the outer sheath of the cord 26 to grip it tightly.

The optic fibre 50 passes into the skeleton and illuminates the member 36 which includes, or itself acts, as a light diffuser causing segments of the outer surface of the body 30 to glimmer or glow.

The light source, usually an LED, in the bite alarm that it used to illuminate the bobbin 22 may be permanently activated when fishing in poor light conditions. For this purpose, a switch may be provided on the bite alarm or the light source may be activated by an ambient light sensor. To avoid draining the power supply of the bite alarm 20, the LED may be made to glow dimly. This can be achieved by supplying only a small current or by rapidly applying pulses having a small mark to space ratio. The brightness of the bobbin can be adjusted in the latter case by pulse width modulation of the applied voltage pulses.

It is not however necessary for the bobbin to be illuminated at all times and it may suffice for it to be illuminated only when a movement of the line is detected by the bite alarm. Thus, the LED may be illuminated by the bite alarm only when a threshold level of movement is detected. That threshold may be the same as the threshold required for the bite alarm to generate its own audible or visual warning signal, but alternatively, it may be a lower threshold to give advance warning and to ensure that the bobbin is already visible at the time that the bite alarm is activated.

## Claims

1. A bite alarm comprising a sensor for detecting movement of a fishing line of a fishing rod resting on the bite alarm, and a signal generator for providing an audible and/or visible warning when line movement is detected, the bite alarm further comprising a connector for a cord of a bobbin which is to be suspended from the fishing line by a releasable line clip, the connector being positioned in register with a light source powered by the bite alarm and serving to emit light to be transmitted to the bobbin by way of an optic fibre in the cord.

2. A bite alarm as claimed in claim 1, wherein the light source of the bite alarm for illuminating a bobbin is activated at all times when fishing in poor light conditions.

3. A bite alarm as claimed in claim 2, wherein, in order reduce the current drain on a power supply of the bite alarm, the light source is energised to glow only dimly by application of a reduced voltage or voltage pulses having a low mark to space ratio.

4. A bite alarm as claimed in claim 1, wherein the light source of the bite alarm is activated only in response to detection of a line movement exceeding a preset threshold.

5. A bite alarm as claimed in claim 4, wherein the threshold level of the movement required to activate the bobbin light source is lower than the level required to generate a visual or audible warning by the bite alarm.

6. In combination, a bobbin comprising a body having a line clip for enabling the body to be releasably secured to a fishing line, a light diffuser within the body and a cord incorporating an optic fibre, and a bite alarm comprising a sensor for detecting movement of a fishing line of a fishing rod resting on the bite alarm, and a signal generator for providing an audible and/or visible warning when line movement is detected, wherein the bite alarm further comprises a connector for the cord of the bobbin and wherein a light source powered by the bite alarm is positioned to couple light into the optic fibre.
